(19) Europäisches Patentamt / European Patent Office / Office européen des brevets

(11) EP 3 703 983 B1

(12) EUROPEAN PATENT SPECIFICATION

(45) Date of publication and mention of the grant of the patent:
**01.04.2026 Bulletin 2026/14**

(21) Application number: **17797121.5**

(22) Date of filing: **03.11.2017**

(51) International Patent Classification (IPC):
**B60R 25/24** (2013.01)    **G07C 9/00** (2020.01)
**G01C 21/16** (2006.01)

(52) Cooperative Patent Classification (CPC):
**G07C 9/00309; G01C 21/166; B60R 25/24;**
G07C 2009/00555; G07C 2209/63

(86) International application number:
**PCT/EP2017/078234**

(87) International publication number:
**WO 2019/086126 (09.05.2019 Gazette 2019/19)**

(54) **METHOD OF DRIVING A COMPONENT OF A VEHICLE, SYSTEM, COMPUTER PROGRAM PRODUCT AND COMPUTER-READABLE MEDIUM**

VERFAHREN ZUR ANSTEUERUNG EINER KOMPONENTE EINES FAHRZEUGS, SYSTEM, COMPUTERPROGRAMMPRODUKT UND COMPUTERLESBARES MEDIUM

PROCÉDÉ D'ENTRAÎNEMENT D'UN COMPOSANT D'UN VÉHICULE, SYSTÈME, PRODUIT PROGRAMME D'ORDINATEUR ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.09.2020 Bulletin 2020/37**

(73) Proprietor: HELLA GmbH & Co. KGaA
**59552 Lippstadt (DE)**

(72) Inventors:
• **ABOU-CHAHINE, Zeid**
  **59558 Lippstadt (DE)**
• **IRLE, Henning**
  **59557 Lippstadt (DE)**
• **SCHLIEP, Frank**
  **59494 Soest (DE)**

(56) References cited:
EP-A1- 2 672 739        DE-A1- 102015 109 468
FR-A1- 3 044 421        US-A1- 2007 168 126
US-A1- 2010 075 655

**Description**

The present invention relates to a method of driving a component of a vehicle by using a portable user identification device for said vehicle and an user identification unit of said vehicle according to the preamble of claim 1, a system for driving a component of a vehicle by using a portable user identification device for said vehicle and an user identification unit of said vehicle according to claim 5, a computer program product and a computer-readable medium.

Such methods, systems, computer program products and computer-readable media are already well known in different embodiments.

Furthermore, the machine translation of the FR 2 929 396 A1 into the English language discloses a system and a method for locating the position of a vehicle by a user. Said known system comprises a portable object intended to be made available to said user, whereat said portable object is equipped with at least one inertial device and means for processing a signal delivered by said inertial device to determine a trajectory followed by said portable object. Said known method for implementing said system comprises the following steps: a step of initializing the implementation of the processing means of said portable object as a result of a request of putting in a locking device of vehicle doors of said vehicle, a first step of acquiring a first signal delivered by said inertial device, a first step of processing said first signal to determine a first trajectory, a step of storing said first trajectory, a step of restoring to said user said first trajectory through the implementation of a screen equipping said portable object, a second step of acquiring a second signal delivered by said inertial device, a second step of processing said second signal to determine a second trajectory, a step of implementing means for comparing said first and second trajectories for determining an item of information for retrieving said vehicle.

The following documents display similar systems and methods.

US 2010 075 655 A1 discloses a system and method for controlling systems of a vehicle with a cell phone. For this reason, a distance is determined between the cell phone and the vehicle. The system may include a GPS or other navigation system, whereat the GPS is used to determine the location of the vehicle and/or to determine the location and direction of travel of the cell phone as well as to determine the distance between the cell phone and the vehicle. If the distance of the cell phone to the vehicle is increasing the doors of the vehicle are locked; if the aforementioned distance is decreasing, the doors of the vehicle are unlocked.

EP 2 672 739 A1 discloses an accessory control to a vehicle with geo-fencing. For this reason, a mobile device can monitor its own location and assess whether one or more location-based criteria have been satisfied based on the location of the mobile device and the location of the vehicle. A motion detector can be used to estimate a past, current or future motion of the vehicle.

FR 3 044 421 A1 discloses a system for automatically locking the doors of a vehicle when the distance between a portable user identification device and said vehicle becomes greater than a predetermined threshold. The portable user identification device comprises a movement sensor in order to determine a distance vector between the portable user identification device and the vehicle when the user departs from the vehicle.

US 2007 168 126 A1 discloses an inertial waypoint finder using a combination of inertial sensors and, perhaps, a digital compass, a device which can record movement in all directions relative to an origin or initial position.

DE 10 2015 109 468 A1 discloses an access control system with an enhanced security level, comprising at least one authentification element, at least one device for the location of the authentification element and at least one compare unit.

It is an object of the invention to provide a higher level of security by driving a component of a vehicle by using a portable user identification device for a vehicle, whereat said component is designed as a central locking system of said vehicle.

This object is solved by a method of driving a component of a vehicle by using a portable user identification device for said vehicle and an user identification unit of said vehicle according to the features of claim 1, wherein to a point of time $t_n$ by means of said movement sensor of said portable user identification device a position of said portable user identification device relative to a position of said portable user identification device to a point of time $t_n = t_l$, to which said portable user identification device is departing from said vehicle, is determined and stored in said memory on a regular basis, starting with said point of time $t_n = t_l$, whereat a position of said portable user identification device to a point of time $t_n = t_m$, to which said portable user identification device is arriving at said vehicle again is transmitted as said identifying signal by said transmitter of said portable user identification device to said receiver of said user identification unit of said vehicle, whereat said component of said vehicle will be driven by said controller to unlock doors of said vehicle, if said identifying signal substantially correlates to a position of said vehicle to said point of time $t_n = t_m$, a system for driving a component of a vehicle by using a portable user identification device for said vehicle and an user identification unit of said vehicle according to the features of claim 5, a computer program product according to claim 7 and a computer-readable medium according to claim 8. Said point of time $t_n = t_l$ is the first point of time said position of said portable user identification device is determined by said movement sensor and said point of time $t_n = t_m$ is the last point of time said position of said portable user identification device is determined by said movement sensor with respect to each time the method according to the invention is processed. For example, said movement sensor determines a spatial position of said portable user identification device, like a position based on a global coordinate system.

A main advantage of the invention is a higher level of security by driving a component of a vehicle by using a portable user identification device for a vehicle, whereat said component is designed as a central locking system of said vehicle. Because of using the invention, said portable user identification device for said vehicle is determining its position relative to a position of said portable user identification device to a point of time $t_n = t_l$, to which said portable user identification device is departing from said vehicle, independently from other parts of said system or said vehicle, therefore, said driving of a component of a vehicle by using a portable user identification device for a vehicle is more secure against relay station attacks.

Basically, said evaluation of said identifying signal sent by said transmitter of said portable user identification device to said receiver of said user identification unit can be of any useful and applicable manner.

An advantageous development of the invention is, that said component of said vehicle will be driven by said controller, if said identifying signal correlates with a position, which is within a certain area around said position of said vehicle defined beforehand. That way, some flexibility of said evaluation of said identifying signal is allowed for. For example, if a user, while carrying said portable user identification device, is leaving said vehicle at one vehicle door and approaching said vehicle at another vehicle door.

According to the invention, said user identification unit comprises at least one vehicle sensor for determining an alteration of a position of said vehicle during a period of time starting with said point of time $t_n = t_l$ said portable user identification device is departing from said vehicle until said point of time $t_n = t_m$ said portable user identification device is arriving at said vehicle again, whereat said evaluation of said identifying signal by said controller is executed according to said alteration of said position of said vehicle. Hereby, the method according to the invention can be used in the aforementioned situation, too. For example, such a situation could occur, if more than one users with more than only one portable user identification devices are using said vehicle.

The same is true for the system according to the invention, where said user identification unit comprises at least one vehicle sensor for determining an alteration of a position of said vehicle during a period of time starting with said point of time $t_n = t_l$ said portable user identification device is departing from said vehicle until said point of time $t_n = t_m$ said portable user identification device is arriving at said vehicle again, whereat said controller is built in such a manner, that said evaluation of said identifying signal by said controller can be executed according to said alteration of said position of said vehicle.

Another advantageous development of the method according to the invention is, that said point of time $t_n = t_l$, to which said portable user identification device is departing from said vehicle, is stored in said memory of said portable user identification device and said controller of said user identification unit of said vehicle, whereat said evaluation of said identifying signal by said controller is executed according to said point of time $t_n = t_l$ stored. That way, the security against relay station attacks or other attacks is further improved.

A further advantageous development of the method according to the invention is, that an operation of said movement sensor of said portable user identification device is started and/or stopped according to an amount of energy available to said portable user identification device to operate said portable user identification device in a low power mode. Hereby, a malfunctioning of basic functions of said portable user identification device because of running out of energy due to the usage of said movement sensor of said portable user identification unit is avoided.

In general, said movement sensor of said system according to the invention can be of any useful and applicable type, design, material, dimension and arrangement.

Advantageously, said movement sensor is built as a 9-axes-sensor. A 9-axes-sensor is a sensor, which comprises three acceleration sensors for measuring in x, y, z directions, three gyroscopes for measuring turns around said x, y, z directions and three magnetometers for measuring in said x, y, z directions.

The figure is a schematic illustration of a system according to the present invention, wherein only the details necessary for the understanding of the invention are shown.

It is shown by:

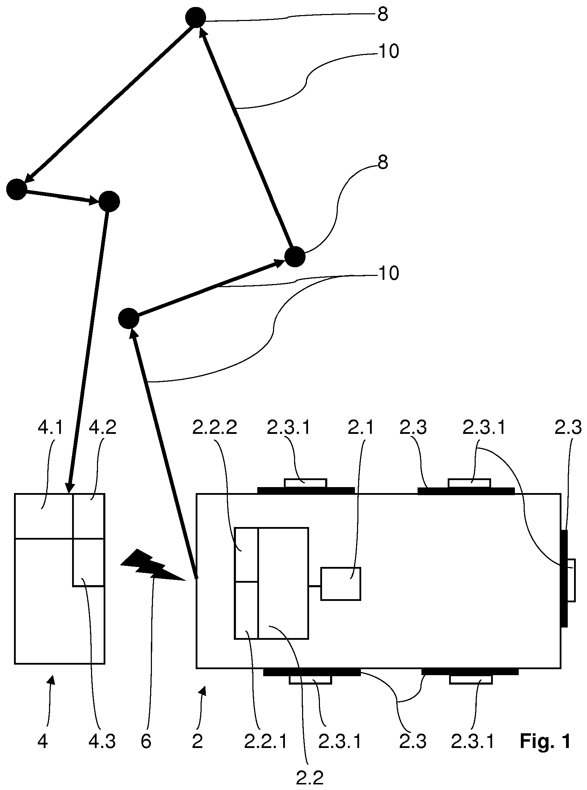

Fig. 1 an embodiment of a system according to the invention in a partial view.

Fig. 1 displays an embodiment of a system for driving a component 2.1 of a vehicle 2 by using a portable user identification device 4 for said vehicle 2 and an user identification unit 2.2 of said vehicle 2 according to the invention. Said portable user identification device 4 is designed as a key fob and comprises a movement sensor 4.1, a memory 4.2 and a transmitter 4.3. Said user identification unit 2.2 of said vehicle 2 comprises a receiver 2.2.1 and a controller 2.2.2, whereat said controller 2.2.2 is built in such a manner, that an identifying signal sent by said transmitter 4.3 of said portable user identification device 4 to said receiver 2.2.1 of said user identification unit 2.2 can be evaluated by said controller 2.2.2 and said component 2.1 of said vehicle 2 can be driven by said controller 2.2.2 according to said evaluation of said identifying signal. Said movement sensor 4.1 of said portable user identification device 4 is designed as a 9-axes-sensor, comprising three acceleration sensors for measuring in x, y, z directions, three gyroscopes for measuring turns around said x, y, z directions and three magnetometers for measuring in said x, y, z directions. Said component 2.1 of said vehicle 2 is designed as a central locking system of said vehicle 2. Said identifying signal sent by said transmitter 4.3 of said portable user identification device 4 to said receiver 2.2.1 of said user identification unit 2.2 is symbolized by an arrow 6.

The function of said system as well as the method according to the embodiment of Fig. 1 are explained as follows:
A user of said vehicle 2 is deboarding said vehicle 2 while carrying said portable user identification device 4. Said user is not displayed. Because of deboarding said vehicle 2, said portable user identification device 4 is departing from said vehicle 2 and a determination of a position of said portable user identification device 4 by means of said movement sensor 4.1 is started and processed on a regular basis. Said movement sensor 4.1 determines a spatial position of said portable user identification device 4. Said departing of said portable user identification device 4 from said vehicle 2 takes place to a point of time $t_n = t_l$. Following this initial determination of a position of said portable user identification device 4 to said point of time $t_n = t_l$ a position of said portable user identification device 4 is determined by said movement sensor 4.1 on a regular basis to a point of time $t_n$. Said position determined to a certain point of time $t_n$ is a position of said portable user identification device 4 relative to said initial position of said portable user identification device 4 determined to said point of time $t_n = t_l$. For example, said position of said portable user identification device 4 to a point of time $t_n$ is determined by means of vector addition.

The current position of said portable user identification device 4 to a certain point of time $t_n$ is stored in said memory 4.2. A position of said portable user identification device 4 stored before is written over by said current position of said portable user identification device 4. Thus, said current position of said portable user identification device 4 stored in said memory 4.2 is always a relative position of said portable user identification device 4 to said position of said portable user identification device 4 to said point of time $t_n = t_l$, to which said portable user identification device 4 is departing from said vehicle 2.

After deboarding from said vehicle 2, said user carrying said portable user identification device 4 walks a certain path away from said vehicle 2, for example, to do some shopping. After a while, said user walks again back to said vehicle 2 for boarding said vehicle 2 and to drive away. This path walked by said user is symbolized in Fig. 1 by a number of dots 8 and arrows 10. Each dot 8 symbolizes a certain position of said portable user identification device 4 carried by said user to a certain point of time $t_n$. Each arrow 10 symbolizes a certain distance and direction said portable user identification device 4 has been carried by said user. For example, at said point of time $t_n = t_l$ said movement sensor 4.1 of said portable user identification device 4 starts to determine a position of said portable user identification device 4 relative to a position of said portable user identification device 4 to said point of time $t_n = t_l$. Thus, the position of said portable user identification device 4 is equal to the position of said vehicle 2 at $t_n = t_l$.

While said user walks away from said vehicle 2 carrying said portable user identification device 4, said portable user identification device 4 reaches a position, which is characterized by said arrow 10 starting at said vehicle 2 and ending at said dot 8 correlating to this arrow 10, namely to the head of this arrow 10. At the point of time, said portable user identification device 4 has reached the aforementioned dot 8, the position of said portable user identification device 4 at this point of time relative to the position of said portable user identification device 4 to said point of time $t_n = t_l$ is determined by said movement sensor 4.1 and stored in said memory 4.2. Thus, said memory 4.2 contains a position of said portable user identification device 4 to said point of time correlated to said aforementioned dot 8 and relative to said position of said portable user identification device 4 to said point of time $t_n = t_l$.

Said user walks further on with said portable user identification device 4, thus said portable user identification device 4 is moving further on along a path displayed by said arrow 10, starting at said aforementioned dot 8 to a point of time directly following said aforementioned dot 8 and ending at said dot 8 correlating to this arrow 10, namely to the head of this arrow 10. The determination and the recording of the position of said portable user identification device 4 by using said movement sensor 4.1 goes on until a point of time $t_n = t_m$ has been reached.

At said point of time $t_n = t_m$ said portable user identification device 4 is arriving at said vehicle 2 again. The position of said portable user identification device 4 corresponding to said point of time $t_n = t_m$ is displayed in Fig. 1 by the schematic drawing of said portable user identification device 4 and with a certain distance to said vehicle 2 in order to support the explanations given to the embodiment shown by Fig. 1. In reality, said user carrying said portable user identification device 4 touches a door handle 2.3.1 of a door 2.3 of said vehicle 2. Said vehicle 2 comprises five doors 2.3 in total, each with a door handle 2.3.1. In each of said door handles 2.3.1 of said vehicle 2 a touch-sensitive sensor is integrated. Said touch-sensitive sensors are not displayed. By touching one of said door handles 2.3.1 of said doors 2.3 said user initiates a transmission of said identifying signal 6 by said transmitter 4.3 of said portable user identification device 4 to said receiver 2.2.1 of said user identification unit 2.2 of said vehicle 2. Said identifying signal 6 correlates to said position of said portable user identification device 4 to said point of time $t_n = t_m$, to which said portable user identification device 4 is arriving at said vehicle 2 again. Said vehicle 2 did not move in a period of time beginning with $t_n = t_l$ and ending with $t_n = t_m$.

Said controller 2.2.2 of said user identification unit 2.2 of said vehicle 2 evaluates said identifying signal 6 sent by said transmitter 4.3 and received by said receiver 2.2.1. Because of the fact, that said position of said portable user identification device 4 at said point of time $t_n = t_m$, determined by said movement sensor 4.1, stored in said memory 4.2 and sent via said transmitter 4.3 is substantially equal to said position of said vehicle 2 at said point of time $t_n = t_m$, said controller 2.2.2 of said user identification unit 2.2 is driving said component 2.1; thus, said central locking system 2.1 of said vehicle 2 is unlocking said doors 2.3. For example, said position of said vehicle 2 can be determined by a vehicle sensor of said vehicle 2 or any other useful and applicable type of determining a position of said vehicle 2. Said position determined as mentioned before can be stored in a memory of said user identification unit 2.2 of said vehicle 2 in order to evaluate said identifying signal 6 of said user identification device 4.

In order to design a more flexible system according to the invention, said component of said vehicle will be driven by said controller, if said identifying signal correlates with a position, which is within a certain area around said position of said vehicle defined beforehand. For example, said certain area defined beforehand could be two meters around said vehicle in order to compensate for the case, if said user does approach a vehicle door 2.3 at said point of time $t_n = t_m$ not equal to the vehicle door 2.3 said user was deboarding said vehicle 2 at said point of time $t_n = t_l$.

The invention is not limited to the exemplary embodiments of the inventive system and the inventive method discussed above. The portable user identification device could not only be designed as a key fob, but could be of any useful and applicable type. For example, the portable user identification device could be a smartphone or something similar. The same is true for the movement sensor, which can be of any useful and applicable type, material, dimension and arrangement.

Said user identification unit comprises at least one vehicle sensor for determining an alteration of a position of said vehicle during a period of time starting with said point of time $t_n = t_l$ said portable user identification device is departing from said vehicle until said point of time $t_n = t_m$ said portable user identification device is arriving at said vehicle again, whereat said evaluation of said identifying signal by said controller is executed according to said alteration of said position of said vehicle. That way, it is possible to compensate for a certain movement of said vehicle during said aforementioned period of time, said portable user identification device has left said vehicle. For example, such a situation could occur, if more than one users with more than only one portable user identification devices are using said vehicle. Therefore, the invention allows for its application in such situations, too. Said vehicle sensor could be of any useful and applicable type, material, dimension and arrangement. For instance, said vehicle sensor could be a GNSS sensor in order to use a global navigation satellite system. Said vehicle sensor could also be a movement sensor of a portable device which is linked in a signal transmitting manner to said user identification unit of said vehicle.

Furthermore, said point of time $t_n = t_l$, to which said portable user identification device is departing from said vehicle, could be stored in said memory of said portable user identification device and said controller of said user identification unit of said vehicle, whereat said evaluation of said identifying signal by said controller could be executed according to said point of time $t_n = t_l$ stored. Hereby, the level of security against relay station attacks or other attacks is further increased.

In other embodiments, an operation of said movement sensor of said portable user identification device could be started and/or stopped according to an amount of energy available to said portable user identification device to operate said portable user identification device in a low power mode. That way, basic functions of said portable user identification device are not affected by a movement sensor of the invention. For example, said movement sensor could be deactivated after a certain amount of time. Thus, after deactivating said movement sensor, said portable user identification device is used like a usual key fob. For instance, in order to unlock a central locking system a user would have to press a button of said key fob.

The invention relates also to a computer program product, comprising instructions to cause the inventive system, for example, the system according to the explained embodiment, to execute the steps of the inventive method, for example, the method according to the explained embodiment, and a computer-readable medium having stored thereon such a computer program product.

The signal transmissions between said portable user identification device and said user identification unit of said vehicle as well as a signal transmission between exterior devices and said user identification unit for determining the position of said vehicle at a certain point of time could be secured by using cryptographic techniques.

List of reference numbers

[0038]

| 2 | Vehicle |
| 2.1 | Component of the vehicle 2 |
| 2.2 | User identification unit of the vehicle 2 |
| 2.2.1 | Receiver of the user identification unit 2.2 |
| 2.2.2 | Controller of the user identification unit 2.2 |
| 2.3 | Doors of the vehicle 2 |
| 2.3.1 | Door handles of the doors 2.3 |
| 4 | Portable user identification device |
| 4.1 | Movement sensor of the portable user identification device 4 |
| 4.2 | Memory of the portable user identification device 4 |

4.3     Transmitter of the portable user identification device 4

6       Identifying signal

8       Positions of the portable user identification device 4

10      Distances and directions of movement of the portable user identification device 4

**Claims**

1. Method of driving a component (2.1) of a vehicle (2) by using a portable user identification device (4) for said vehicle (2) and an user identification unit (2.2) of said vehicle (2), whereat said portable user identification device (4) comprises a movement sensor (4.1), a memory (4.2) and a transmitter (4.3), and said user identification unit (2.2) of said vehicle (2) comprises a receiver (2.2.1) and a controller (2.2.2), whereat said controller (2.2.2) evaluates an identifying signal (6) sent by said transmitter (4.3) of said portable user identification device (4) to said receiver (2.2.1) of said user identification unit (2.2) and said controller (2.2.2) drives said component (2.1) of said vehicle (2) according to said evaluation of said identifying signal (6), whereat said component (2.1) is designed as a central locking system of said vehicle (2),
wherein

to a point of time $t_n$ by means of said movement sensor (4.1) of said portable user identification device (4) a position of said portable user identification device (4) relative to a position of said portable user identification device (4) to a point of time $t_n = t_l$, to which said portable user identification device (4) is departing from said vehicle (2), is determined and stored in said memory (4.2) on a regular basis, starting with said point of time $t_n = t_l$, whereat a position of said portable user identification device (4) to a point of time $t_n = t_m$, to which said portable user identification device (4) is arriving at said vehicle (2) again is transmitted as said identifying signal (6) by said transmitter (4.3) of said portable user identification device (4) to said receiver (2.2.1) of said user identification unit (2.2) of said vehicle (2), whereat said component (2.1) of said vehicle (2) will be driven by said controller (2.2.2) to unlock doors (2.3) of said vehicle (2.1), if said identifying signal (6) substantially correlates to a position of said vehicle (2) to said point of time

$$t_n = t_m,$$

wherein
said user identification unit comprises at least one vehicle sensor for determining an alteration of a position of said vehicle during a period of time starting with said point of time $t_n = t_l$ said portable user identification device is departing from said vehicle until said point of time $t_n = t_m$ said portable user identification device is arriving at said vehicle again, whereat said evaluation of said identifying signal by said controller is executed according to said alteration of said position of said vehicle.

2. Method of claim 1,
wherein
said component of said vehicle will be driven by said controller, if said identifying signal correlates with a position, which is within a certain area around said position of said vehicle defined beforehand.

3. Method according to one of the claims 1 to 2,
wherein
said point of time $t_n = t_l$, to which said portable user identification device is departing from said vehicle, is stored in said memory of said portable user identification device and said controller of said user identification unit of said vehicle, whereat said evaluation of said identifying signal by said controller is executed according to said point of time $t_n = t_l$ stored.

4. Method according to one of the claims 1 to 3,
wherein
an operation of said movement sensor of said portable user identification device is started and/or stopped according to an amount of energy available to said portable user identification device to operate said portable user identification device in a lower power mode.

5. System for driving a component (2.1) of a vehicle (2) by using a portable user identification device (4) for said vehicle (2) and an user identification unit (2.2) of said vehicle (2), said system comprising said component (2.1), said portable user identification device (4) and said user identification unit (2.2), whereat said portable user identification device (4) comprises a movement sensor (4.1), a memory (4.2) and a transmitter (4.3), and said user identification unit (2.2) of said vehicle (2) comprises a receiver (2.2.1) and a controller (2.2.2), whereat said controller (2.2.2) is built in such a manner, that an identifying signal (6) sent by said transmitter (4.3) of said portable user identification device (4) to said receiver (2.2.1) of said user identification unit (2.2) can be evaluated by said controller (2.2.2) and said component (2.1) of said vehicle (2) can be driven by said controller (2.2.2) according to said evaluation of said identifying signal (6), whereat said component (2.1) is designed as a central locking system of said vehicle (2), wherein

said system is built in such a manner, that to a

point of time $t_n$ by means of said movement sensor (4.1) of said portable user identification device (4) a position of said portable user identification device (4) relative to a position of said portable user identification device (4) to a point of time $t_n = t_l$, to which said portable user identification device (4) is departing from said vehicle (2), can be determined and stored in said memory (4.2) on a regular basis, starting with said point of time $t_n = t_l$, whereat a position of said portable user identification device (4) to a point of time $t_n = t_m$, to which said portable user identification device (4) is arriving at said vehicle (2) again can be transmitted as said identifying signal (6) by said transmitter (4.3) of said portable user identification device (4) to said receiver (2.2.1) of said user identification unit (2.2) of said vehicle (2), and whereat said component (2.1) of said vehicle (2) can be driven by said controller (2.2.2) to unlock doors (2.3) of said vehicle (2.1), if said identifying signal (6) substantially correlates to a position of said vehicle (2) to said point of time $t_n = t_m$, wherein

said user identification unit comprises at least one vehicle sensor for determining an alteration of a position of said vehicle during a period of time starting with said point of time $t_n = t_l$ said portable user identification device is departing from said vehicle until said point of time $t_n = t_m$ said portable user identification device is arriving at said vehicle again, whereat said controller is built in such a manner, that said evaluation of said identifying signal by said controller can be executed according to said alteration of said position of said vehicle.

6. System according to claim 5,
   wherein
   said movement sensor (4.1) is built as a 9-axes-sensor (4.1).

7. A computer program product comprising instructions to cause the system of one of the claims 5 or 6 to execute the steps of the method of one of the claims 1 to 4.

8. A computer-readable medium having stored thereon the computer program product of claim 7.

## Patentansprüche

1. Verfahren zur Ansteuerung einer Komponente (2.1) eines Fahrzeugs (2) unter Verwendung einer tragbaren Benutzeridentifikationsvorrichtung (4) für das Fahrzeug (2) und einer Benutzeridentifikationseinheit (2.2) des Fahrzeugs (2), wobei die tragbare Benutzeridentifikationsvorrichtung (4) einen Bewegungssensor (4.1), einen Speicher (4.2) und einen Sender (4.3) umfasst, und die Benutzeridentifikationseinheit (2.2) des Fahrzeugs (2) einen Empfänger (2.2.1) und eine Steuerung (2.2.2) umfasst, wobei die Steuerung (2.2.2) ein identifizierendes Signal (6) auswertet, das von dem Sender (4.3) der tragbaren Benutzeridentifikationsvorrichtung (4) an den Empfänger (2.2.1) der Benutzeridentifikationseinheit (2.2) gesendet wird, und die Steuerung (2.2.2) die Komponente (2.1) des Fahrzeugs (2) entsprechend der Auswertung des identifizierenden Signals (6) ansteuert, wobei die Komponente (2.1) als eine Zentralverriegelung des Fahrzeugs (2) ausgebildet ist,
   wobei

   zu einem Zeitpunkt $t_n$ mittels des Bewegungssensors (4.1) der tragbaren Benutzeridentifikationsvorrichtung (4) eine Position der tragbaren Benutzeridentifikationsvorrichtung (4) relativ zu einer Position der tragbaren Benutzeridentifikationsvorrichtung (4) zu einem Zeitpunkt $t_n = t_l$, zu dem sich die tragbare Benutzeridentifikationsvorrichtung (4) von dem Fahrzeug (2) entfernt, auf einer regelmäßigen Basis bestimmt und in dem Speicher (4.2) gespeichert wird, beginnend mit dem Zeitpunkt $t_n = t_l$, wobei eine Position der tragbaren Benutzeridentifikationsvorrichtung (4) zu einem Zeitpunkt $t_n = t_m$, zu dem die tragbare Benutzeridentifikationsvorrichtung (4) wieder am Fahrzeug (2) ankommt, von dem Sender (4.3) der tragbaren Benutzeridentifikationsvorrichtung (4) als das identifizierende Signal (6) an den Empfänger (2.2.1) der Benutzeridentifikationseinheit (2.2) des Fahrzeugs (2) gesendet wird, wobei die Komponente (2.1) des Fahrzeugs (2) von der Steuerung (2.2.2) angesteuert wird, um Türen (2.3) des Fahrzeugs (2.1) zu entriegeln, wenn das identifizierende Signal (6) im Wesentlichen mit einer Position des Fahrzeugs (2) zu dem Zeitpunkt $t_n = t_m$ korreliert,
   wobei
   die Benutzeridentifikationseinheit wenigstens einen Fahrzeugsensor umfasst zum Bestimmen einer Änderung der Position des Fahrzeugs während eines Zeitraums beginnend mit dem Zeitpunkt $t_n = t_l$, zu dem sich die tragbare Benutzeridentifikationsvorrichtung vom Fahrzeug entfernt, bis zum Zeitpunkt $t_n = t_m$, zu dem die tragbare Benutzeridentifikationsvorrichtung wieder am Fahrzeug ankommt, wobei die Auswertung des identifizierenden Signals durch die Steuerung entsprechend der Veränderung der Position des Fahrzeugs ausgeführt wird.

2. Verfahren nach Anspruch 1,
   wobei

die Komponente des Fahrzeugs von der Steuerung angesteuert wird, wenn das identifizierende Signal mit einer Position korreliert, die sich innerhalb eines bestimmten, zuvor definierten Bereichs rings um die Position des Fahrzeugs befindet.

3. Verfahren nach einem der Ansprüche 1 bis 2, wobei
der Zeitpunkt $t_n = t_l$, zu dem sich die tragbare Benutzeridentifikationsvorrichtung von dem Fahrzeug entfernt, in dem Speicher der tragbaren Benutzeridentifikationsvorrichtung und der Steuerung der Benutzeridentifikationseinheit des Fahrzeugs gespeichert wird, wobei die Auswertung des identifizierenden Signals durch die Steuerung entsprechend dem gespeicherten Zeitpunkt $t_n = t_l$ ausgeführt wird.

4. Verfahren nach einem der Ansprüche 1 bis 3, wobei
ein Betrieb des Bewegungssensors der tragbaren Benutzeridentifikationsvorrichtung entsprechend einer der tragbaren Benutzeridentifikationsvorrichtung zur Verfügung stehenden Energiemenge gestartet und/oder gestoppt wird, um die tragbare Benutzeridentifikationsvorrichtung in einem Modus mit geringerer Energie zu betreiben.

5. System zur Ansteuerung einer Komponente (2.1) eines Fahrzeugs (2) unter Verwendung einer tragbaren Benutzeridentifikationsvorrichtung (4) für das Fahrzeug (2) und einer Benutzeridentifikationseinheit (2.2) des Fahrzeugs (2), wobei das System die Komponente (2.1), die tragbare Benutzeridentifikationsvorrichtung (4) und die Benutzeridentifikationseinheit (2.2) umfasst, wobei die tragbare Benutzeridentifikationsvorrichtung (4) einen Bewegungssensor (4.1), einen Speicher (4.2) und einen Sender (4.3) umfasst, und die Benutzeridentifikationseinheit (2.2) des Fahrzeugs (2) einen Empfänger (2.2.1) und eine Steuerung (2.2.2) umfasst, wobei die Steuerung (2.2.2) in einer solchen Weise gebaut ist, dass ein identifizierendes Signal (6), das von dem Sender (4.3) der tragbaren Benutzeridentifikationsvorrichtung (4) an den Empfänger (2.2.1) der Benutzeridentifikationseinheit (2.2) gesendet wird, von der Steuerung (2.2.2) ausgewertet werden kann und die Komponente (2.1) des Fahrzeugs (2) entsprechend der Auswertung des identifizierenden Signals (6) von der Steuerung (2.2.2) angesteuert werden kann, wobei die Komponente (2.1) als eine Zentralverriegelung des Fahrzeugs (2) gestaltet ist, wobei

das System in einer solchen Weise gebaut ist, dass zu einem Zeitpunkt $t_n$ mittels des Bewegungssensors (4.1) der tragbaren Benutzeridentifikationsvorrichtung (4) eine Position der tragbaren Benutzeridentifikationsvorrichtung (4) relativ zu einer Position der tragbaren Benutzeridentifikationsvorrichtung (4) zu einem Zeitpunkt $t_n = t_l$, zu dem sich die tragbare Benutzeridentifikationsvorrichtung (4) von dem Fahrzeug (2) entfernt, auf einer regelmäßigen Basis bestimmt und in dem Speicher (4.2) gespeichert werden kann, beginnend mit dem Zeitpunkt $t_n = t_l$, wobei eine Position der tragbaren Benutzeridentifikationsvorrichtung (4) zu einem Zeitpunkt $t_n = t_m$, zu dem die tragbare Benutzeridentifikationsvorrichtung (4) wieder am Fahrzeug (2) ankommt, von dem Sender (4.3) der tragbaren Benutzeridentifikationsvorrichtung (4) als das identifizierende Signal (6) an den Empfänger (2.2.1) der Benutzeridentifikationseinheit (2.2) des Fahrzeugs (2) gesendet werden kann, und wobei die Komponente (2.1) des Fahrzeugs (2) von der Steuerung (2.2.2) angesteuert werden kann, um Türen (2.3) des Fahrzeugs (2.1) zu entriegeln, wenn das identifizierende Signal (6) im Wesentlichen mit einer Position des Fahrzeugs (2) zu dem Zeitpunkt $t_n = t_m$ korreliert,
wobei
die Benutzeridentifikationseinheit wenigstens einen Fahrzeugsensor umfasst zum Bestimmen einer Änderung einer Position des Fahrzeugs während eines Zeitraums beginnend mit dem Zeitpunkt $t_n = t_l$, zu dem sich die tragbare Benutzeridentifikationsvorrichtung vom Fahrzeug entfernt, bis zum Zeitpunkt $t_n = t_m$, zu dem die tragbare Benutzeridentifikationsvorrichtung wieder am Fahrzeug ankommt, wobei die Steuerung in einer solchen Weise gebaut ist, dass die Auswertung des identifizierenden Signals durch die Steuerung entdsprechend der Veränderung der Position des Fahrzeugs ausgeführt werden kann.

6. System nach Anspruch 5, wobei
der Bewegungssensor (4.1) als ein 9-Achsen-Sensor (4.1) gebaut ist.

7. Computerprogrammprodukt, umfassend Anweisungen, um das System nach einem der Ansprüche 5 oder 6 zu veranlassen, die Schritte des Verfahrens nach einem der Ansprüche 1 bis 4 auszuführen.

8. Computerlesbares Medium, auf dem das Computerprogrammprodukt nach Anspruch 7 gespeichert ist.

**Revendications**

1. Procédé d'entraînement d'un composant (2.1) d'un véhicule (2) à l'aide d'un dispositif d'identification d'utilisateur portable (4) pour ledit véhicule (2) et d'une unité d'identification d'utilisateur (2.2) dudit véhicule (2), ledit dispositif d'identification d'utilisateur portable (4) comprenant un capteur de mouvement (4.1), une mémoire (4.2) et un émetteur (4.3) et ladite unité d'identification d'utilisateur (2.2) dudit véhicule (2) comprenant un récepteur (2.2.1) et un contrôleur (2.2.2), ledit contrôleur (2.2.2) évaluant un signal d'identification (6) envoyé par ledit émetteur (4.3) dudit dispositif d'identification d'utilisateur portable (4) audit récepteur (2.2.1) de ladite unité d'identification d'utilisateur (2.2) et ledit contrôleur (2.2.2) entraînant ledit composant (2.1) dudit véhicule (2) en fonction de ladite évaluation dudit signal d'identification (6), ledit composant (2.1) étant conçu comme un système de verrouillage centralisé dudit véhicule (2),
sachant que

à un instant $t_n$ au moyen dudit capteur de mouvement (4.1) dudit dispositif d'identification d'utilisateur portable (4), une position dudit dispositif d'identification d'utilisateur portable (4) par rapport à une position dudit dispositif d'identification d'utilisateur portable (4) à un instant $t_n = t_l$, auquel ledit dispositif portable d'identification d'utilisateur (4) s'éloigne dudit véhicule (2), est déterminée et stockée dans ladite mémoire (4.2) à intervalles réguliers, à partir dudit instant $t_n = t_l$, auquel une position dudit dispositif d'identification d'utilisateur portable (4) à un moment $t_n = t_m$, auquel ledit dispositif d'identification d'utilisateur portable (4) arrive à nouveau audit véhicule (2), est transmise en tant que signal d'identification (6) par ledit émetteur (4.3) dudit dispositif d'identification d'utilisateur portable (4) audit récepteur (2.2.1) de ladite unité d'identification d'utilisateur (2.2) dudit véhicule (2), auquel cas ledit composant (2.1) dudit véhicule (2) sera entraîné par ledit contrôleur (2.2.2) pour déverrouiller les portes (2.3) dudit véhicule (2.1), si ledit signal d'identification (6) correspond sensiblement à une position dudit véhicule (2) à l'instant $t_n = t_m$, sachant que
ladite unité d'identification d'utilisateur comprend au moins un capteur de véhicule pour déterminer une modification de la position dudit véhicule pendant une période de temps commençant au moment $t_n = t_l$ où ledit dispositif d'identification d'utilisateur portable quitte ledit véhicule jusqu'au moment $t_n = t_m$ où ledit dispositif d'identification d'utilisateur portable arrive à nouveau audit véhicule, ladite évaluation dudit signal d'identification par ledit contrôleur étant exécutée en fonction de ladite modification de ladite position dudit véhicule.

2. Procédé selon la revendication 1,
sachant que
ledit composant dudit véhicule sera actionné par ledit contrôleur, si ledit signal d'identification correspond à une position qui se trouve dans une certaine zone autour de ladite position dudit véhicule définie au préalable.

3. Procédé selon l'une des revendications 1 à 2,
sachant que
ledit instant $t_n = t_l$, auquel ledit dispositif d'identification d'utilisateur portable s'éloigne dudit véhicule, est enregistré dans ladite mémoire dudit dispositif d'identification d'utilisateur portable et dudit contrôleur de ladite unité d'identification d'utilisateur dudit véhicule, ladite évaluation dudit signal d'identification par ledit contrôleur étant exécutée en fonction dudit instant $t_n = t_l$ enregistré.

4. Procédé selon l'une des revendications 1 à 3,
sachant que
le fonctionnement dudit capteur de mouvement dudit dispositif d'identification d'utilisateur portable est démarré et/ou arrêté en fonction de la quantité d'énergie disponible pour ledit dispositif d'identification d'utilisateur portable afin de faire fonctionner ledit dispositif d'identification d'utilisateur portable dans un mode à faible consommation d'énergie.

5. Système conçu pour l'entraînement d'un composant (2.1) d'un véhicule (2) à l'aide d'un dispositif d'identification d'utilisateur portable (4) pour ledit véhicule (2) et d'une unité d'identification d'utilisateur (2.2) dudit véhicule (2), ledit système comprenant ledit composant (2.1), ledit dispositif d'identification d'utilisateur portable (4) et ladite unité d'identification d'utilisateur (2.2), ledit dispositif d'identification d'utilisateur portable (4) comprenant un capteur de mouvement (4.1), une mémoire (4.2) et un émetteur (4.3) et ladite unité d'identification d'utilisateur (2.2) dudit véhicule (2) comprenant un récepteur (2.2.1) et un contrôleur (2.2.2), ledit contrôleur (2.2.2) étant construit de telle manière qu'un signal d'identification (6) envoyé par ledit émetteur (4.3) dudit dispositif d'identification d'utilisateur portable (4) audit récepteur (2.2.1) de ladite unité d'identification d'utilisateur (2.2) peut être évalué par ledit contrôleur (2.2.2) et ledit composant (2.1) dudit véhicule (2) peut être commandé par ledit contrôleur (2.2.2) en fonction de ladite évaluation dudit signal d'identification (6), ledit composant (2.1) étant conçu comme un système de verrouillage centralisé dudit véhicule (2),
sachant que

ledit système est construit de manière à ce qu'à un instant $t_n$ au moyen dudit capteur de mouvement (4.1) dudit dispositif d'identification d'utilisateur portable (4), une position dudit dispositif d'identification d'utilisateur portable (4) par rapport à une position dudit dispositif d'identification d'utilisateur portable (4) à un instant $t_n = t_l$,

auquel ledit dispositif portable d'identification d'utilisateur (4) s'éloigne dudit véhicule (2), peut être déterminée et stockée dans ladite mémoire (4.2) à intervalles réguliers, à partir dudit instant $t_n = t_l$, auquel une position dudit dispositif portable d'identification d'utilisateur (4) à un moment $t_n = t_m$, auquel ledit dispositif d'identification d'utilisateur portable (4) arrive à nouveau audit véhicule (2), peut être transmise en tant que signal d'identification (6) par ledit émetteur (4.3) dudit dispositif d'identification d'utilisateur portable (4) audit récepteur (2.2.1) de ladite unité d'identification d'utilisateur (2.2) dudit véhicule (2), auquel cas ledit composant (2.1) dudit véhicule (2) peut être entraîné par ledit contrôleur (2.2.2) pour déverrouiller les portes (2.3) dudit véhicule (2.1), si ledit signal d'identification (6) correspond sensiblement à une position dudit véhicule (2) à l'instant $t_n = t_m$,
sachant que
ladite unité d'identification d'utilisateur comprend au moins un capteur de véhicule pour déterminer une modification de la position dudit véhicule pendant une période de temps commençant au moment $t_n = t_l$ où ledit dispositif d'identification d'utilisateur portable quitte ledit véhicule jusqu'au moment $t_n = t_m$ où ledit dispositif d'identification d'utilisateur portable arrive à nouveau audit véhicule, ledit contrôleur étant conçu de telle manière que ladite évaluation dudit signal d'identification par ledit contrôleur puisse être exécutée en fonction de ladite modification de ladite position dudit véhicule.

6. Système selon la revendication 5, sachant que ledit capteur de mouvement (4.1) est conçu comme un capteur à 9 axes (4.1).

7. Un programme informatique comprenant des instructions visant à amener le système selon l'une des revendications 5 ou 6 à exécuter les étapes du procédé selon l'une des revendications 1 à 4.

8. Support de données lisible par ordinateur sur lequel est stocké le programme informatique selon la revendication 7.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2929396 A1
- US 2010075655 A1
- EP 2672739 A1
- FR 3044421 A1
- US 2007168126 A1
- DE 102015109468 A1